# EUROPEAN PATENT APPLICATION

(11) **EP 4 439 843 A1**
(43) Date of publication of application: **02.10.2024**
(21) Application number: 23753008.4
(22) Date of filing: 13.01.2023
(51) Int. Cl.: H01M 50/42, H01M 50/449, H01M 50/446, H01M 50/431, H01M 50/489, H01M 10/052

(54) **SEPARATOR FOR ELECTROCHEMICAL DEVICE, MANUFACURING METHOD THEREFOR, AND ELECTROCHEMICAL DEVICE INCLUDING SAME**

(30) Priority: 14.02.2022 KR 20220019171
(71) Applicant: LG Energy Solution, Ltd., Seoul 07335 (KR)
(72) Inventor: SHIN, Hwan Ho, Daejeon 34122 (KR); BAE, Dong Hun, Daejeon 34122 (KR); KIM, Ji Eun, Daejeon 34122 (KR); SUNG, Dong Wook, Daejeon 34122 (KR)
(74) Representative: Hoffmann Eitle
(86) International application number: PCT/KR2023/000642
(87) International publication number: WO 2023/153657

(57) **Abstract**

Proposed is a separator for an electrochemical device capable of securing peel strength between a porous polymer substrate and an organic and inorganic composite porous layer and having excellent heat resistance. A manufacturing method thereof and an electrochemical device equipped with the separator are also proposed. The separator according to one embodiment includes a porous polymer substrate and an organic and inorganic composite porous layer positioned on at least one surface of the porous polymer substrate. The organic and inorganic composite porous layer includes inorganic particles and a particulate acrylic binder polymer, in which the particulate acrylic binder polymer has a crosslinked structure mediated by a benzophenone functional group.

## Description

### Technical Field

The present disclosure claims the benefit of the filing date of Korean Patent Application No. 10-2022-0019171 filed with the Korean Intellectual Property Office on February 14, 2022, the entire contents of which is incorporated in the present disclosure by reference. The present disclosure relates to a separator for an electrochemical device, a method of manufacturing the same, and an electrochemical device including the separator.

### Background Art

Recently, interest in energy storage technology has been increasing. As energy storage technology expands to application fields to mobile phones, camcorders, laptop PCs, and even electric vehicles, demand for the high energy density of electrochemical devices used as power sources of electronic devices is increasing. A lithium secondary battery is an electrochemical device that can best meet these demands, and research on this is currently being actively conducted.

These lithium secondary batteries are composed of a cathode, an anode, an electrolyte, and a separator, among which the separator requires high ion conductivity to increase the permeability of lithium ions based on the insulation and high pore density for separating and electrically insulating the cathode and the anode.

As such a separator, a separator coated with a mixture of fine inorganic particles and a crosslinked acrylic binder polymer on a polyolefin-based porous substrate is used. When the crosslinked acrylic binder polymer has low crosslinking density, the crosslinked acrylic binder polymer has a low storage modulus, which is disadvantageous for heat resistance characteristics. However, when the crosslinking density is high, the storage modulus at high temperatures increases, but the adhesive force decreases, which is disadvantageous in the peel strength between the polyolefin-based porous substrate and the coating layer.

Therefore, there is still a high need for a separator using a crosslinked acrylic binder polymer capable of ensuring both heat resistance characteristics and peel strength between a polyolefin-based porous substrate and a coating layer.

### Disclosure

### Technical Problem

Therefore, the problem to be solved by the present disclosure is to provide a separator for an electrochemical device including a crosslinked acrylic binder polymer capable of ensuring both peel strength and heat resistance characteristics between a porous polymer substrate and an organic and inorganic composite porous layer.

Another problem to be solved by the present disclosure is to provide a method of manufacturing a separator for an electrochemical device including a crosslinked acrylic binder polymer capable of ensuring both peel strength and heat resistance characteristics between a porous polymer substrate and an organic and inorganic composite porous layer.

### Technical Solution

In order to solve the above problems, according to an aspect of the present disclosure, a separator for an electrochemical device of the following embodiments is provided.

The first embodiment relates to a separator for an electrochemical device, the separator includes: a porous polymer substrate; and an organic and inorganic composite porous layer positioned on at least one surface of the porous polymer substrate and containing inorganic particles and a binder polymer, in which the binder polymer comprises a particulate binder polymer, and the particulate acrylic binder polymer has a crosslinked structure mediated by a benzophenone functional group.

In the second embodiment, according to the first embodiment, the particulate acrylic binder polymer may include an acrylic monomer having a benzophenone functional group.

In the third embodiment, according to the second embodiment, the particulate acrylic binder polymer may further include a branched or non-branched (meth)acrylic acid monomer having 1 to 20 carbon atoms, a branched or non-branched (meth)acrylate monomer having 1 to 20 carbon atoms, an acrylonitrile monomer, a vinylpyrrolidone monomer, a vinyl acetate monomer, or two or more thereof.

In the fourth embodiment, the particulate acrylic binder polymer in any one of the first to third embodiments may have a structure represented by Formula 1 below:

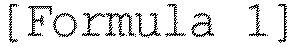

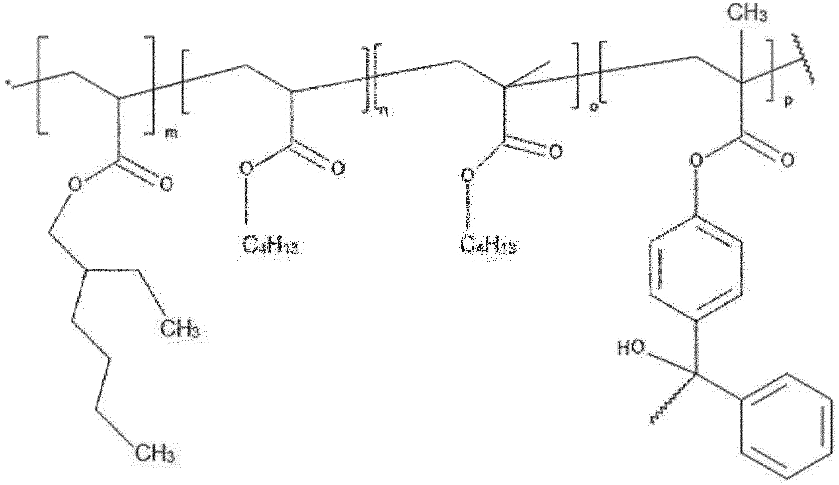

In Formula 1, m, n, o, and p are each an integer of 1 or more.

In the fifth embodiment, the particulate acrylic binder polymer in any one of the first to fourth embodiments may have a storage modulus in a range of 20,000 to 300,000 Pa at 50°C.

In the sixth embodiment, according to any one of the first to fifth embodiments, the particulate acrylic binder polymer may have a glass transition temperature in a range of -70°C to 70°C.

In the seventh embodiment, according to any one of the first to sixth embodiments, the particulate acrylic binder polymer may have a gel fraction in a range of 10% to 90%.

In the eighth embodiment, according to any one of the first to seventh embodiments, the particulate acrylic binder polymer may have an average particle diameter in a range of 0.001 to 10 µm.

In the ninth embodiment, according to any one of the first to eighth embodiments, the inorganic particles may include any one of BaTiO, BaTiO₃, Pb(Zr,Ti)O₃ (PZT), Pb₁₋ₓLaₓZr_{x-y}Ti_{y}O₃ (PLZT, where 0 < x < 1, 0 < y < 1), Pb(Mg_{1/3}Nb_{2/3})O₃-PbTiO₃ (PMN-PT), Hafnia (HfO₂), SrTiO₃, SnO₂, CeO₂, MgO, Mg(OH)₂, NiO, CaO, ZnO, Al(OH)₃, ZrO₂, Y₂O₃, Al₂O₃, γ-AlOOH, SiC, TiO₂, lithium phosphate (Li₃PO₄), lithium titanium phosphate (LiₓTi_{y}(PO₄)₃, where 0 < x < 2, 0 < y < 3), lithium aluminum titanium phosphate (LiₓAl_{y}Ti_{z}(PO₄)₃, where 0 < x < 2, 0 < y < 1, 0 < z < 3), (LiAlTiP)ₓO_{y}-based glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x <4, 0 < y < 2), SiS₂-based glass (LiₓSi_{y}S_{z}, 0 < x < 3, 0 < y < 2, 0 < z < 4), P₂S₅-based glass (LiₓP_{y}S_{z}, 0 < x < 3, 0 < y < 3, 0 < z < 7), or two or more thereof.

In the tenth embodiment, according to any one of the first to ninth embodiments, the inorganic particles may have an average particle diameter in a range of 0.1 nm to 2.0 µm.

In the eleventh embodiment, according to any one of the first to tenth embodiments, the binder polymer may further include a non-particulate binder polymer.

In the twelfth embodiment, according to the eleventh embodiment, the non-particulate binder polymer may include carboxy methyl cellulose, polyacrylic acid, polyacrylamide, or two or more thereof.

In the thirteenth embodiment, according to any one of the first to twelfth embodiments, the weight ratio of the inorganic particles and the binder polymer may be 99.9: 0.1 to 70:30.

In the fourteenth embodiment, according to any one of the eleventh to thirteenth embodiments, the weight ratio of the particulate acrylic binder polymer and the non-particulate acrylic binder polymer may be 5: 95 to 95: 5.

In the fifteenth embodiment, according to any one of the first to fourteenth embodiments, the organic and inorganic composite porous layer may have a thickness in a range of 0.1 to 10 µm.

In the sixteenth embodiment, according to any one of the first to fifteenth embodiments, after the separator for an electrochemical device is left at 135°C for 30 minutes, a heat shrinkage rate may be 10% or less in a machine direction (MD) and 10% or less in a transverse direction (TD).

In the seventeenth embodiment, according to any one of the 1st to sixteenth embodiments, the separator for an electrochemical device may have a peel strength between the porous polymer substrate and the organic and inorganic composite porous layer in a range of 5 to 1000 gf/15 mm.

In order to solve the above problems, according to an aspect of the present disclosure, a method of manufacturing a separator for an electrochemical device according to the following embodiments is provided.

The eighteenth embodiment relates to a method of manufacturing a separator for an electrochemical device, the method including: preparing a slurry for forming an organic and inorganic composite porous layer including inorganic particles and a binder polymer comprising a non-crosslinked particulate acrylic binder polymer containing a benzophenone functional group; applying and drying the slurry for forming the organic and inorganic composite porous layer on at least one surface of a porous polymer substrate; and irradiating with ultraviolet rays.

In the nineteenth embodiment, according to the eighteenth embodiment, the non-crosslinked particulate acrylic binder polymer may include a first acrylic monomer and a second acrylic monomer, and the first acrylic monomer may include any one of benzophenone methacrylate, 6-(4-benzoylphenoxy) hexyl methacrylate, benzophenone acrylate, or two or more thereof.

In the twentieth embodiment, according to the nineteenth embodiment, the second acrylic monomer may include any one of branched or non-branched (meth)acrylic acid having 1 to 20 carbon atoms or branched or non-branched (meth)acrylate having 1 to 20 carbon atoms, acrylonitrile, vinylpyrrolidone, vinyl acetate, or two or more thereof.

In the twenty-first embodiment, according to any one of the eighteenth to twentieth embodiments, the non-crosslinked particulate acrylic binder polymer may include a copolymer of Formula 2 below:

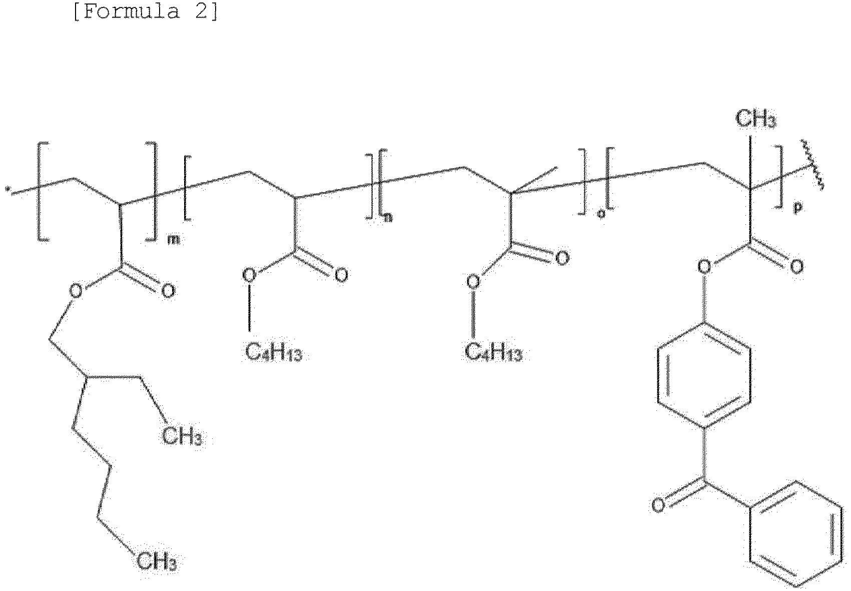

In Formula 2, m, n, o, and p are each an integer of 1 or more.

In the twenty-second embodiment, according to any one of the nineteenth to twenty-first embodiments, the content of the first acrylic monomer may be 500 to 20,000 ppm based on the weight of the second acrylic monomer.

In the twenty-third embodiment, according to any one of the eighteenth to twenty-second embodiments, the non-crosslinked particulate acrylic binder polymer may have a storage modulus in a range of 10,000 to 80,000 Pa at 50°C before UV exposure.

In the twenty-fourth embodiment, according to any one of the eighteenth to twenty-third embodiments, the change rate of the storage modulus of the non-crosslinked particulate acrylic binder polymer at 50°C before and after UV exposure may be in a range of 20% to 300%.

In the twenty-fifth embodiment, according to any one of the eighteenth to twenty-fourth embodiments, the amount of irradiation by the ultraviolet rays may be 0.1 to 10 J.

In the twenty-sixth embodiment, according to any one of the eighteenth to twenty-fifth embodiments, the wavelength of the ultraviolet rays may be in a range of 200 nm to 400 nm.

In the twenty-seventh embodiment, according to the twenty-sixth embodiment, the wavelength of the ultraviolet light may be in a range of 230 to 350 nm.

In order to solve the above problems, according to an aspect of the present disclosure, an electrochemical device of the following embodiment is provided.

The twenty-eighth embodiment relates to an electrochemical device including a cathode, an anode, and a separator interposed between the cathode and the anode, in which the separator includes the separator for the electrochemical device according to any one of the first to seventeenth embodiments.

### Advantageous Effects

The separator for an electrochemical device, according to an embodiment of the present disclosure, includes a particulate acrylic binder polymer crosslinked with a benzophenone functional group and has excellent peel strength and heat resistance between the porous polymer substrate and the organic and inorganic composite porous layer.

The method of manufacturing a separator for an electrochemical device, according to an embodiment of this disclosure, ensures peel strength between the porous polymer substrate and the porous organic and inorganic composite layer because the particulate acrylic binder polymer is not crosslinked during the coating process of the slurry for forming the organic and inorganic composite porous layer. After the coating process, heat resistance may be ensured because the particulate acrylic binder polymer is crosslinked through a benzophenone functional group by exposing ultraviolet rays.

### Best Mode

Hereinafter, preferred embodiments of the present disclosure will be described in detail. Prior to this, the terms or words used in the present specification and claims should not be construed as being limited to conventional or dictionary meanings, and the inventor should properly understand the concept of the term in order to best describe his disclosure. Based on the principle that it can be defined, it should be interpreted as meaning and concept consistent with the technical idea of the present disclosure.

Therefore, since the configurations described in the embodiments described herein are only the most preferred embodiments of the present disclosure and do not represent all the technical ideas of the present disclosure, it should be understood that there may be various equivalents and modifications that may replace them at the time of the present application.

The method of manufacturing a separator for an electrochemical device according to an aspect of the present disclosure includes: preparing a slurry for forming an organic and inorganic composite porous layer including inorganic particles and a non-crosslinked particulate acrylic binder polymer containing a benzophenone functional group; applying and drying the slurry for forming the organic and inorganic composite porous layer on at least one surface of a porous polymer substrate; and exposing ultraviolet rays.

Hereinafter, a method for manufacturing a separator for an electrochemical device according to an embodiment of the present disclosure will be mainly reviewed.

First, a slurry for forming an organic and inorganic composite porous layer containing inorganic particles and a non-crosslinked particulate acrylic binder polymer containing a benzophenone functional group is prepared.

The inorganic particles are not particularly limited as long as they are electrochemically stable. That is, the inorganic particles that can be used in the present disclosure are not particularly limited as long as oxidation and/or reduction reactions do not occur in the operating voltage range of the applied electrochemical device (e.g., 0 to 5 V based on Li/Li⁺). In particular, when inorganic particles having a high dielectric constant are used as the inorganic particles, the ionic conductivity of the electrolyte may be easily improved by contributing to an increase in the degree of dissociation of an electrolyte salt, such as a lithium salt, in a liquid electrolyte.

In one embodiment of the present disclosure, the inorganic particles may include high dielectric constant inorganic particles having a dielectric constant of 5 or more, preferably 10 or more. Non-limiting examples of inorganic particles having a dielectric constant of 5 or more may include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, AlOOH, Al(OH)₃, SiC, TiO₂, etc., alone or a mixture of two or more.

In another embodiment of the present disclosure, inorganic particles having lithium ion transport ability, that is, inorganic particles containing lithium elements but not storing lithium and having a function of moving lithium ions can be used as the inorganic particles. Non-limiting examples of inorganic particles having lithium ion transport ability may further include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂-based glass (LiₓSi_{y}S_{z}, 0<x<3, 0<y<2, 0<z<4), P₂S₅-based glass (LiₓP_{y}S_{z}, 0<x<3, 0<y<3, 0<z<7) or a mixture of two or more thereof.

In one embodiment of the present disclosure, the inorganic particles may have an average particle diameter in a range of 0.1 nm to 2.0 µm, 0.1 µm to 1 µm, or 0.2 µm to 0.8 µm. When the average particle diameter of the inorganic particles satisfies the range described above, the dispersibility of the inorganic particles is maintained, it is easy to adjust the physical properties of the separator, and it is easy to prevent the phenomenon of increasing the thickness of the organic and inorganic composite porous layer, thereby improving mechanical properties. In addition, due to the excessively large pore size of the organic and inorganic composite porous layer, it may be easy to reduce the probability of an internal short circuit occurring during the charging and discharging of the battery.

Throughout this specification, the average particle diameter means the D50 particle diameter, and "D50 particle diameter" means the particle diameter at the 50% point of the cumulative distribution of the number of particles according to the particle diameter. The particle size can be measured using a laser diffraction method. Specifically, after dispersing the powder to be measured in a dispersion medium and then introduced into a commercially available laser diffraction particle size measuring device (e.g., Microtrac S3500) to measure a diffraction pattern difference according to particle size when particles pass through a laser beam to calculate a particle size distribution. The D50 particle diameter may be measured by calculating a particle diameter at a point where the cumulative distribution of the number of particles according to the particle diameter in the measuring apparatus becomes 50%.

The non-crosslinked particulate acrylic binder polymer containing a benzophenone functional group has a structure in which the acrylic copolymer has a particle shape and contains a benzophenone functional group. In addition, the non-crosslinked particulate acrylic binder polymer does not contain a crosslinked structure in a state before crosslinking.

The non-crosslinked particulate acrylic binder polymer containing the benzophenone functional group has a low storage modulus before UV exposure and thus can ensure excellent peel strength between the porous polymer substrate and the organic and inorganic composite porous layer.

When irradiated with ultraviolet light, the benzophenone functional group serves to crosslink the acrylic copolymer with each other. Specifically, when ultraviolet rays are emitted to the acrylic copolymer, hydrogen atoms in the benzophenone functional group are removed by hydrogen abstraction to become radicals and form radicals in the acrylic copolymer so that the acrylic copolymers can be crosslinked with each other.

As the acrylic copolymers in the non-crosslinked particulate acrylic binder polymer are crosslinked with each other after irradiation with UV, the particulate acrylic binder polymer has a high storage modulus and can secure heat resistance.

In one embodiment of the present disclosure, the non-crosslinked particulate acrylic binder polymer may include a first acrylic monomer and a second acrylic monomer.

In this case, the first acrylic monomer may include benzophenone methacrylate, 6-(4-benzoylphenoxy) hexyl methacrylate, benzophenone acrylate, or two or more thereof.

In one embodiment of the present disclosure, the second acrylic monomer may include any one of branched or non-branched (meth)acrylic acid having 1 to 20 carbon atoms, or branched or non-branched (meth)acrylate having 1 to 20 carbon atoms, acrylonitrile, vinylpyrrolidone, vinyl acetate, or two or more thereof.

The branched or non-branched (meth)acrylic acid having 1 to 20 carbon atoms and the branched or non-branched (meth)acrylate having 1 to 20 carbon atoms may include, for example, alkyl (meth)acrylates, alicyclic (meth) acrylates, hydroxy (meth)acrylates, and the like.

When the second acrylic monomer includes the above-mentioned type, it may be easier to maintain the particle shape in the aqueous dispersion medium.

In one embodiment of the present disclosure, the content of the first acrylic monomer may be in a range of 500 to 20,000 ppm, 1,000 to 10,000 ppm, or 5,000 to 10,000 ppm based on the weight of the second acrylic monomer. When the content of the first acrylic monomer satisfies the above range, crosslinking may occur at a desired level, and it may be easier to prevent the polymer chain from being broken by radicals generated by the first acrylic monomer.

In one embodiment of the present disclosure, the non-crosslinked particulate acrylic binder polymer may include a copolymer represented by Formula 2 below:

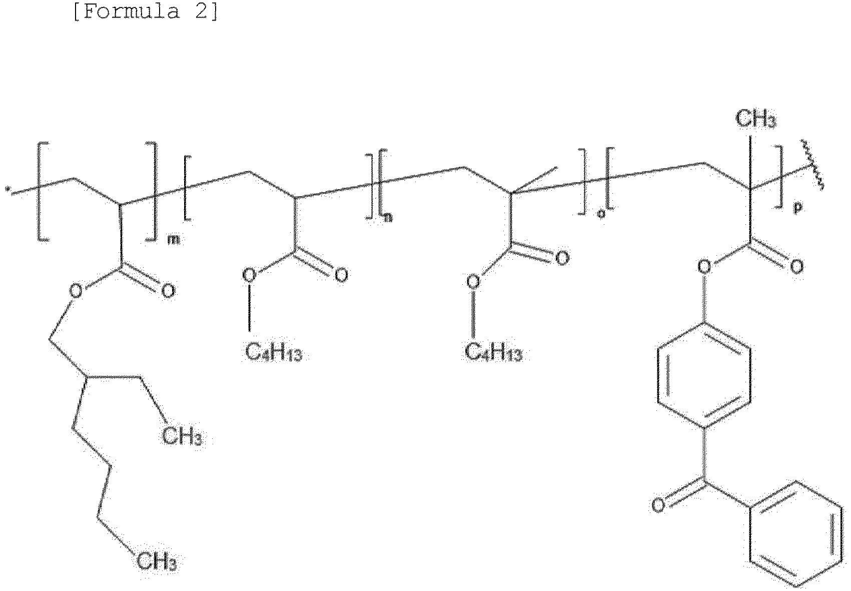

In Formula 2, m, n, o, and p are each an integer of 1 or more.

The non-crosslinked particulate acrylic binder polymer containing the benzophenone functional group has a low storage modulus at the high temperature before UV exposure and thus can ensure excellent peel strength between the porous polymer substrate and the organic and inorganic composite porous layer. For example, the non-crosslinked particulate acrylic binder polymer at 50°C before UV exposure may have a storage modulus in a range of 10,000 to 80,000 Pa. When the storage modulus of the non-crosslinked particulate acrylic binder polymer at 50°C satisfies the aforementioned range, it may be easier to secure peel strength between the porous polymer substrate and the organic and inorganic composite porous layer.

In this specification, the storage modulus can be measured by dynamic mechanical analysis (DMA). For example, a sample can be measured by testing a constant frequency of 1 Hz, a preload force of 0.01 N, an amplitude of 20 µm, and a tensile force of 1°/min from -100°C to 150°C at a force track of 120%.

In one embodiment of the present disclosure, the slurry for forming the organic and inorganic composite porous layer may include an aqueous dispersion medium. When the slurry for forming an organic and inorganic composite porous layer includes an aqueous dispersion medium, the slurry is environmentally friendly and does not require excessive heat amount for drying. In addition, there is an advantage in that additional explosion-proof facilities are not required.

In one embodiment of the present disclosure, the aqueous dispersion medium may include water, methanol, ethanol, ethylene glycol, diethylene glycol, glycerol alcohol, or two or more thereof.

The slurry for forming the organic and inorganic composite porous layer may be prepared by dispersing the non-crosslinked particulate acrylic binder polymer in a dispersion medium, then adding the inorganic particles and dispersing, but the manufacturing method of the slurry is not limited thereto.

In one embodiment of the present disclosure, the weight ratio of the inorganic particles to the binder polymer may be 99:1 to 70:30 or 97:3 to 90:10. At this time, the binder polymer may include a non-crosslinked particulate acrylic binder polymer. When the weight ratio of the inorganic particles to the binder polymer satisfies the aforementioned range, the organic and inorganic composite porous layer can be stably maintained.

In one embodiment of the present disclosure, the slurry for forming the organic and inorganic composite porous layer may further include a non-particulate binder polymer. In this case, it may be advantageous to secure heat resistance by increasing adhesion between inorganic particles. In addition, in the above weight ratio of the inorganic particles and the binder polymer, the binder polymer may include a non-crosslinked particulate acrylic binder polymer and a non-particulate binder polymer.

In one embodiment of the present disclosure, the non-particulate binder polymer may be an aqueous binder polymer. That is, the non-particulate binder polymer may be a binder polymer dissolved in an aqueous solvent or dispersed by an aqueous dispersion medium in an aqueous condition.

In one embodiment of the present disclosure, the non-particulate binder polymer may include carboxy methyl cellulose, polyacrylic acid, polyacrylamide, or two or more thereof.

In one embodiment of the present disclosure, the weight ratio of the non-crosslinked particulate acrylic binder polymer and the non-particulate binder polymer may be 5:95 to 95:5. When the weight ratio of the non-crosslinked particulate acrylic binder polymer and the non-particulate binder polymer satisfies the aforementioned range, it is easier to secure processability and heat resistance during coating.

In one embodiment of the present disclosure, the slurry for forming the organic and inorganic composite porous layer may further include a dispersant.

In one embodiment of the present disclosure, the dispersant may include polymethacrylate, polymethacrylic acid, sodium polymethacrylate, polyvinyl alcohol, sodium polyacrylate, or two or more thereof.

Next, the slurry for forming the organic and inorganic composite porous layer is applied on at least one surface of the porous polymer substrate and dried.

As the porous polymer substrate, any material that can be commonly used as a material for a separator for an electrochemical device may be used without particular limitation. Such a porous polymer substrate is a thin film including a polymer material, and non-limiting examples of the polymer material may include polymer resins such as polyolefin resin, polyethylene terephthalate, polybutylene terephthalate, polyacetal, polyamide, polycarbonate, polyimide, and polyetherether ketone, polyether sulfone, polyphenylene oxide, polyphenylene sulfide, and polyethylene naphthalate. In addition, the porous polymer substrate may be a nonwoven fabric or a porous polymer film formed of the above-described polymer material, or a laminate of two or more thereof. Specifically, the porous polymer substrate may be any one of the following a) to e) .

a) a porous film formed by melting and extruding a polymer resin, b) a multilayer film in which two or more layers of the porous film of a) are laminated, c) a nonwoven fabric web manufactured by integrating filaments obtained by melting and spinning a polymer resin, d) a multilayer film in which two or more layers of the nonwoven fabric web of c) are laminated, e) a porous film having a multilayer structure including two or more of a) to d) .

The porous polymer substrate may be prepared by forming pores through a conventional method known in the art, for example, a wet method using a solvent, a diluent, or a pore-forming agent, or a dry method using a stretching method, in order to ensure excellent air permeability and porosity from the materials.

In one embodiment of the present disclosure, the thickness of the porous polymer substrate is not particularly limited but may be in a range of 1 to 100 µm or 1 to 30 µm. When the thickness of the porous polymer substrate is within the above-described range, it is possible to easily secure energy density while preventing a problem in which the separator may be easily damaged during the use of the battery.

The pore size and porosity of the porous polymer substrate are not particularly limited as long as they are suitable for use in electrochemical devices, and the pore size may be in a range of 0.01 to 50 µm or 0.1 to 20 µm, and the porosity is in a range of 5% to 95%. When the pore size and porosity are within the above-described ranges, it may be easy to prevent the porous polymer substrate from acting as a resistor, and the mechanical properties of the porous polymer substrate may be easily maintained.

The porosity and pore size of the porous polymer substrate may be measured by the BET 6-point method by the nitrogen gas adsorption flow method using a scanning electron microscope (SEM) image, a mercury porosimeter, a capillary flow porosimeter, or a porosimetry analyzer (Bell Japan Inc, Belsorp-II mini).

Non-limiting examples of the method of applying the slurry for forming the organic and inorganic composite porous layer on one side of the porous polymer substrate may include a dip coating method, a die coating method, a roll coating method, a comma coating method, a micro gravure coating method, a doctor blade coating method, a reverse roll coating method, and a direct roll coating method.

The drying may be performed by a method known in the art and may be performed in a batch or continuous manner using an oven or a heated chamber at a temperature range considering the vapor pressure of the aqueous dispersion medium used.

In one embodiment of the present disclosure, the drying may be performed at 40°C to 100°C. When drying occurs within the above-described range, it may be easier to prevent a part in which the slurry for forming the organic and inorganic composite porous layer is not dried and to prevent the porous polymer substrate from being deformed due to a high temperature.

Next, ultraviolet rays are emitted. As the irradiation with ultraviolet rays is performed, the acrylic copolymers in the non-crosslinked particulate acrylic binder polymer are crosslinked with each other by the benzophenone functional group.

As the acrylic copolymers in the non-crosslinked particulate acrylic binder polymer are crosslinked with each other at a high temperature after irradiation with UV, the particulate acrylic binder polymer has a high storage modulus and can secure heat resistance. For example, the change rate of the storage modulus at 50°C before and after irradiation of the particulate acrylic binder polymer with ultraviolet rays may be in a range of 20% to 300%. When the change rate of the storage modulus at 50°C before and after irradiation of the particulate acrylic binder polymer with UV satisfies the above-described range, an adhesive force between the porous polymer substrate and the organic and inorganic composite porous layer may be ensured, and the separator may more easily ensure heat resistant properties.

The rate of change of the storage modulus at 50°C can be measured as follows:
The change rate of storage modulus at 50°C = (storage modulus at 50°C after irradiation with UV - storage modulus at 50°C before irradiation with UV) / (storage modulus at 50°C before irradiation with UV)

The irradiation with UV may be performed by using a UV crosslinking device and appropriately adjusting the time of the irradiation with UV and irradiation amount in consideration of conditions such as the content ratio of the benzophenone functional group. For example, the time of the irradiation with UV and the irradiation light amount can be set to a condition in which the polymer chain in the particulate acrylic binder polymer is sufficiently crosslinked to secure the desired heat resistance and the separator is not damaged by the heat generated by the UV lamp. In addition, the ultraviolet lamp used in the ultraviolet crosslinking device may be appropriately selected from high-pressure mercury lamps, metal lamps, gallium lamps, LED lamps, and the like, and the emission wavelength and capacity of the ultraviolet lamp may be appropriately selected according to the process.

In one embodiment of the present disclosure, the irradiation amount of the ultraviolet light may be in a range of 0.1 to 10 J or 0.3 to 6 J.

The irradiation amount with the ultraviolet rays can be measured using a portable photometer called Miltec's H-type UV bulb and UV power puck. When the amount of light is measured using Miltec's H-type UV bulb, three wavelength values of UVA, UVB, and UVC are obtained for each wavelength, and the ultraviolet rays of the present disclosure correspond to UVA. The UV power puck is passed on a conveyor under the light source under the same conditions as the sample, and at this time, the value of the amount of ultraviolet light displayed on the UV power puck is referred to as "irradiation amount with ultraviolet rays".

In one embodiment of the present disclosure, the wavelength of the ultraviolet rays may be in a range of 200 to 400 nm or 230 to 350 nm. In particular, when the wavelength of the ultraviolet rays is in a range of 230 to 350 nm, the ultraviolet absorption of the benzophenone functional group may occur most actively.

Conventional acrylic binders have problems in that heat resistance is inferior when the degree of crosslinking is low, and adhesive strength decreases when the degree of crosslinking is high.

The method of manufacturing a separator for an electrochemical device, according to an embodiment of the present disclosure, ensures excellent adhesive force between a porous polymer substrate and the organic and inorganic composite porous layer because the binder polymer is not crosslinked until the slurry for forming the organic-inorganic composite porous layer are irradiated with ultraviolet rays. In addition, after irradiating the slurry for forming the organic-inorganic composite porous layer with ultraviolet rays, the particulate acrylic binder polymer is crosslinked to secure heat resistance. Accordingly, the finally prepared separator for an electrochemical device may have excellent heat resistance while securing sufficient adhesion between the porous polymer substrate and the organic and inorganic composite porous layer.

As described above, a separator for an electrochemical device may be manufactured according to the method of manufacturing a separator for an electrochemical device according to an embodiment of the present disclosure.

A separator for an electrochemical device, according to an aspect of the present disclosure, includes: a porous polymer substrate; and an organic and inorganic composite porous layer positioned on at least one surface of the porous polymer substrate and containing inorganic particles and a particulate acrylic binder polymer, in which the particulate acrylic binder polymer has a crosslinked structure mediated by a benzophenone functional group.

For the porous polymer substrate and inorganic particles, refer to the above description.

The organic and inorganic composite porous layer may be formed on one side or both sides of the porous polymer substrate. The organic and inorganic composite porous layer may improve the safety of the separator by preventing the porous polymer substrate from exhibiting extreme heat shrinkage behavior at high temperatures due to inorganic particles.

In the organic and inorganic composite porous layer, the particulate acrylic binder polymer attaches the inorganic particles to each other (i.e., the particulate acrylic binder polymer connects and fixes the inorganic particles) so that the inorganic particles are maintained in a bound state and can maintain a state in which the inorganic particles and the porous polymer substrate are bonded.

The particulate acrylic binder polymer has a crosslinked structure. Specifically, the acrylic copolymer has a structure in which benzophenone functional groups are mediated by crosslinking with each other.

In one embodiment of the present disclosure, the crosslinked particulate acrylic binder polymer may include an acrylic monomer containing a benzophenone functional group, and the acrylic monomer including the benzophenone functional group may have a crosslinked structure via a benzophenone functional group. For example, the acrylic monomer containing the benzophenone functional group in the particulate acrylic binder polymer may contain a 4-benzoyl phenyl methacrylate monomer.

In one embodiment of the present disclosure, the particulate acrylic binder polymer may further include a branched or non-branched (meth)acrylic acid monomer having 1 to 20 carbon atoms, a branched or non-branched (meth)acrylate monomer having 1 to 20 carbon atoms, an acrylonitrile monomer, a vinyl pyrrolidone monomer, a vinyl acetate monomer, or two or more thereof. The branched or non-branched (meth)acrylic acid monomer having 1 to 20 carbon atoms and the branched or non-branched (meth)acrylate monomer having 1 to 20 carbon atoms may include any one of alkyl (meth)acrylates, alicyclic (meth) acrylates, hydroxy (meth)acrylates, and the like.

In one embodiment of the present disclosure, the crosslinked particulate acrylic binder polymer may have a structure represented by Formula 1 below:

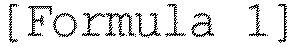

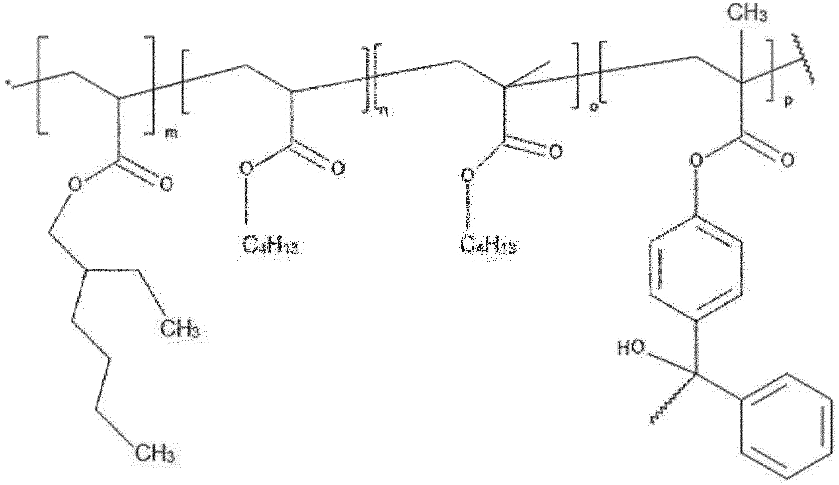

In Formula 1, m, n, o, and p are each an integer of 1 or more.

In one embodiment of the present disclosure, the crosslinked particulate acrylic binder polymer may have a storage modulus in a range of 20,000 to 300,000 Pa at 50°C. When the storage modulus of the crosslinked particulate acrylic binder polymer at 50°C satisfies the aforementioned range, a separator including the particulate acrylic binder polymer may have excellent heat resistance. For example, after the separator is left at 135°C for 30 minutes, the heat shrinkage rate may be 10% or less in the machine direction (MD) and 10% or less in the transverse direction (TD).

In one embodiment of the present disclosure, the glass transition temperature of the crosslinked particulate acrylic binder polymer may be in a range of -70°C to 70°C. When the crosslinked particulate acrylic binder polymer has the glass transition temperature described above, it may be easier to implement adhesion between the porous polymer substrate and the organic and inorganic composite porous layer.

The glass transition temperature of the particulate acrylic binder polymer can be measured using differential scanning calorimetry (DSC). Specifically, the glass transition temperature may be measured using a differential scanning calorimeter at a heating rate of 10°C/min (-50°C to 250°C). For example, the glass transition temperature may be measured using DSC 250 (TA Company).

In one embodiment of the present disclosure, the crosslinked particulate acrylic binder polymer may have a gel fraction of 10% to 90%. When the gel fraction of the particulate acrylic binder polymer is within the aforementioned range, it may be easier for the particulate acrylic binder polymer to have a high temperature storage modulus capable of having excellent heat resistance. For example, the particulate acrylic binder polymer may easily have a storage modulus in a range of 20,000 to 300,000 Pa at 50°C.

The gel fraction of the crosslinked particulate acrylic binder polymer is calculated as a percentage of the remaining weight compared to the initial weight by immersing the crosslinked particulate acrylic binder polymer in a xylene solution at 135°C according to ASTMD2765 and boiling the particulate acrylic binder polymer immersed solution for 12 hours.

In one embodiment of the present disclosure, the crosslinked particulate acrylic binder polymer may have an average particle diameter in a range of 0.001 to 10 µm. When the average particle diameter of the particulate acrylic binder polymer is within the aforementioned range, it is possible to secure processability during coating and to implement stability of the organic and inorganic composite porous layer more easily.

In one embodiment of the present disclosure, the organic and inorganic composite porous layer is bound to each other by the particulate acrylic binder polymer in a state in which the inorganic particles are filled and in contact with each other. Accordingly, interstitial volumes may be formed between the inorganic particles, and the interstitial volumes between the inorganic particles may be an empty space to form pores.

In one embodiment of the present disclosure, the organic and inorganic composite porous layer may have a thickness in a range of 0.1 to 10 µm. When the thickness of the organic and inorganic composite porous layer is within the aforementioned range, appropriate adhesive strength and heat resistance may be realized.

In one embodiment of the present disclosure, the organic and inorganic composite porous layer may have an average pore size in a range of 0.001 to 30 µm or 0.01 to 10 µm. In addition, the organic and inorganic composite porous layer may have porosity in a range of 5% to 95%, 10% to 95%, 20% to 90%, or 30% to 80%. The porosity corresponds to a value obtained by subtracting the volume converted into the weight and density of each component of the organic and inorganic composite porous layer from a volume calculated in the thickness, width, and lengthwise direction of the organic and inorganic composite porous layer.

Meanwhile, in the present disclosure, the porosity and pore size of the porous polymer substrate may be measured by BET 6-point method by the nitrogen gas adsorption flow method using a scanning electron microscope (SEM) image, a mercury porosimeter, a capillary flow porosimeter, or a porosimetry analyzer (Bell Japan Inc, Belsorp-II mini).

The separator for an electrochemical device, according to an embodiment of the present disclosure, includes a particulate acrylic binder polymer crosslinked with a benzophenone functional group and has excellent peel strength and heat resistance between the porous polymer substrate and the organic and inorganic composite porous layer.

In one embodiment of the present disclosure, the heat shrinkage rate after leaving the separator for an electrochemical device at 135°C for 30 minutes may be 10% or less in a machine direction (MD), or 0 to 10%, or 0 to 6% and may be 10% or less in a transverse direction (TD), or 0 to 10%, or 0 to 6%.

In an embodiment of the present disclosure, the separator for an electrochemical device may have a peel strength of 5 to 1000 gf/15 mm, or 10 to 300 gf/15 mm, or 30 gf/15 mm or more between the porous polymer substrate and the organic and inorganic composite porous layer.

The peel strength between the porous polymer substrate and the organic and inorganic composite porous layer may be measured by fixing the separator on a glass plate using a double-sided tape, firmly attaching the tape to the exposed organic and inorganic composite porous layer and measuring the force required to peel off the tape using a tensile strength measuring device. For example, the tensile strength measuring equipment may be Lloyd LS-1.

An electrochemical device may be manufactured by interposing the separator for an electrochemical device between a cathode and an anode.

The electrochemical device may have various shapes, such as a cylindrical shape, a prismatic shape, or a pouch shape.

The electrochemical device may be a lithium secondary battery. The lithium secondary battery may include a lithium metal secondary battery, a lithium ion secondary battery, a lithium polymer secondary battery, or a lithium ion polymer secondary battery.

The electrode to be applied together with the separator for an electrochemical device according to an embodiment of the present disclosure is not particularly limited and may be prepared in a form in which an electrode active material layer including an electrode active material, a conductive material, and a binder is bound to a current collector according to a conventional method known in the art.

Among the electrode active materials, non-limiting examples of the cathode active material may include: layered compounds such as lithium cobalt oxide (LiCoO₂), lithium nickel oxide (LiNiO₂), or a compound substituted with one or more transition metals; lithium manganese oxides of the formula Li₁₊ₓMn₂₋ₓO₄ (where x is 0 to 0.33), LiMnO₃, LiMn₂O₃, LiMnO₂, and the like; lithium copper oxide (Li₂CuO₂); vanadium oxides such as LiV₃O₅, LiV₃O₄, V₂O₂, and Cu₂V₂O₂; Ni site-type lithium nickel oxide represented by the formula LiNi₂₋ₓMₓO₂ (where M = Co, Mn, Al, Cu, Fe, Mg, B, or Ga, and x = 0.01 to 0.3); lithium manganese composite oxides represented by the formula LiMn₂₋ₓMₓO₂ (where M = Co, Ni, Fe, Cr, Zn, or Ta and x = 0.01 to 0.1) or Li₂Mn₃MO₅ (where M = Fe, Co, Ni, Cu, or Zn); LiMn₂O₄ in which a part of Li in the formula is substituted with an alkaline earth metal ion; disulfide compounds; and Fe₂(MoO₄)₃, but are not limited only thereto.

Non-limiting examples of the anode active material may include a conventional anode active material that may be used in the anode of a conventional electrochemical device, and particularly, lithium metal or a lithium alloy, lithium adsorption materials such as carbon, petroleum coke, activated carbon, graphite, or other carbons may be used.

Non-limiting examples of the cathode current collector may include a foil made of aluminum, nickel, or a combination thereof, and non-limiting examples of the anode current collector may include a foil made of copper, gold, nickel, a copper alloy, or a combination thereof.

In one embodiment of the present disclosure, the conductive material used in the anode and the cathode may be added in an amount of 1% to 30% by weight based on the total weight of each active material layer. Such a conductive agent is not particularly limited if it has conductivity without causing a chemical change in the battery. For example, the examples of the conductive agent may include: graphite, such as natural graphite or artificial graphite; carbon blacks, such as acetylene black, Ketjen black, channel black, furnace black, lamp black, and thermo black; conductive fibers, such as carbon fibers and metal fibers; carbon fluoride; powder of metal such as aluminum and nickel; conductive whiskers of zinc oxide and potassium titanate; conductive metal oxides such as titanium oxide; and conductive materials such as polyphenylene derivatives.

In an embodiment of the present disclosure, the binder used in the anode and the cathode is a component that aids the binding of an active material and a conductive material to a current collector and may be generally added in an amount of 1% to 30% by weight based on the total weight of each active material layer. Examples of such binders may include polyvinylidene fluoride (PVdF), polyacrylic acid (PAA), polyvinyl alcohol, carboxyl methyl cellulose (CMC), starch, hydroxypropyl cellulose, regenerated cellulose, polyvinyl pyrrolidone, tetrafluoroethylene, polyethylene, polypropylene, ethylene-propylene-dienter polymer (EPDM), sulfonated EPDM, styrene butadiene rubber, fluororubber, various copolymers and the like.

In one embodiment of the present disclosure, the electrochemical device includes an electrolyte, and the electrolyte may include an organic solvent and a lithium salt. In addition, an organic solid electrolyte or an inorganic solid electrolyte may be used as the electrolyte solution.

Examples of the organic solvent may include an aprotic organic solvent such as N-methyl-2-pyrrolidone, ethylene carbonate, propylene carbonate, butylene carbonate, dimethyl carbonate, diethyl carbonate, gamma-butyrolactone, 1,2-dimethoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, triester phosphorate, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, ethyl propionate.

Lithium salt is a material good to be dissolved in the organic solvent and may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, lithium chloroborane, lithium lower aliphatic carboxylate, lithium tetraphenyl borate, imide, and the like.

In addition, for the purpose of improving charge and discharge characteristics, flame retardancy, etc., in the electrolyte, for example, pyridine, triethylphosphite, triethanolamine, cyclic ether, ethylene diamine, n-glyme, hexaphosphoric acid triamide, nitrobenzene derivatives, sulfur, quinone imine dyes, N-substituted oxazolidinone, N, N-substituted imidazolidine, ethylene glycol dialkyl ether, ammonium salt, pyrrole, 2-methoxy ethanol, aluminum trichloride, etc., may be added. In some cases, a halogen-containing solvent such as carbon tetrachloride or ethylene trifluoride may be further included to impart incombustibility, and carbon dioxide gas may be further included to improve storage properties at high temperatures.

Examples of the organic solid electrolyte may include a polymerized product, including polyethylene derivatives, polyethylene oxide derivatives, polypropylene oxide derivatives, phosphoric acid ester polymers, poly agitation lysine, polyester sulfide, polyvinyl alcohol, polyvinylidene fluoride, a polymer containing ionic dissociation group.

Examples of the inorganic solid electrolyte may include, for example, a lithium nitride, halides, sulfates, and the like such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂.

The electrolyte injection may be performed at an appropriate stage in the battery manufacturing process according to the manufacturing process and required physical properties of the final product. That is, the electrolyte injection may be applied before assembling the battery or in the final stage of assembling the battery.

In one embodiment of the present disclosure, the process of applying the separator for an electrochemical device to a battery may include a general process of winding, as well as a lamination (stack) and folding process of a separator and an electrode.

In one embodiment of the present disclosure, the separator for the electrochemical device may be interposed between the cathode and the anode of the electrochemical device and may be interposed between adjacent cells or electrodes when collecting a plurality of cells or electrodes to form an electrode assembly. The electrode assembly may have various structures, such as a simple stack type, a jelly-roll type, a stack-folding type, and a lamination-stack type.

### Mode for Invention

Hereinafter, in order to aid understanding of the present disclosure, an embodiment will be described in detail. However, the embodiments according to the present disclosure may be modified in various other forms, and the scope of the present disclosure should not be construed as being limited to the embodiments described below. The embodiments of the present disclosure are provided to more completely explain the present disclosure to those of ordinary skill in the art.

### Example 1

### Preparation of non-crosslinked particulate acrylic binder polymer

After polymerization of 2-ethylhexyl acrylate monomer (LG Chemical), butyl acrylate monomer, and 2-hydroxyethyl acrylate monomer in a weight ratio of 75: 10: 15, the polymer and 10,000 ppm of 4-benzoylphenyl methacrylate monomer (LG Chemical) was polymerized at 60°C to prepare a non-crosslinked particulate acrylic binder polymer (average particle diameter (d50): 1 µm).

### Preparation of separators for electrochemical devices

4.5% by weight of the non-crosslinked particulate acrylic binder polymer prepared above, 93.5% by weight of Al₂O₃ (Sumitomo, average particle diameter (d50): 500 nm) as inorganic particles, 1.5% by weight of carboxymethyl cellulose (weight-average molecular weight: 173,000, GL Chem), and 0.5% by weight of polyacrylate (San Nopco) as a dispersant were added to water as a dispersion medium, milled using a bead mill at 25°C for 120 minutes and then dispersed to prepare a slurry for an organic and inorganic composite porous layer.

This was coated on the cross-section of a 9 µm thick polyethylene porous substrate (Toray Co., Ltd.) to a thickness of 2 µm and then dried at 60°C for 10 minutes.

Then, a separator for an electrochemical device was prepared by irradiating with ultraviolet rays such that the irradiation amount with ultraviolet rays was 3 J. At this time, the intensity of irradiation with UV was 80% of the UV light source.

### Example 2

### Preparation of non-crosslinked particulate acrylic binder polymer

After polymerization of 2-ethylhexyl acrylate monomer (LG Chemical), butyl acrylate monomer, and 2-hydroxyethyl acrylate monomer in a weight ratio of 75: 10: 15, the polymer and 5,000 ppm of 4-benzoylphenyl methacrylate monomer (LG Chemical) was polymerized at 60°C to prepare a non-crosslinked particulate acrylic binder polymer (average particle diameter (d50): 1 µm).

### Preparation of separators for electrochemical devices

A separator for an electrochemical device was prepared in the same manner as in Example 1, except that the prepared non-crosslinked particulate acrylic binder polymer was used.

### Comparative Example 1

### Preparation of non-crosslinked particulate acrylic binder polymer

A non-crosslinked particulate acrylic binder polymer (average particle diameter (d50): 500 nm) was prepared by polymerizing 2-ethylhexyl acrylate monomer (LG Chemical), butyl acrylate monomer, and 2-hydroxyethyl acrylate monomer at 60°C in a weight ratio of 75: 10: 15.

### Preparation of separators for electrochemical devices

A separator for an electrochemical device was prepared in the same manner as in Example 1, except that the prepared non-crosslinked particulate acrylic binder polymer was used.

### Comparative Example 2

A separator for an electrochemical device was prepared in the same manner as in Example 1, except that irradiation with ultraviolet rays was not performed.

Evaluation Example 1: Evaluation of physical properties before and after crosslinking of particulate acrylic binder polymer

The glass transition temperature (Tg), the gel fraction before and after crosslinking, and the storage modulus before and after crosslinking of the particulate acrylic binder polymer prepared in Examples 1 to 2 and Comparative Example 1 were measured and shown in the following Table 1.

### Measurement of glass transition temperature after irradiation with UV

After irradiation with UV, the glass transition temperature of the particulate acrylic binder polymer was measured using a DSC 250 (TA Company) at a heating rate of 10°C/min (-50°C to 250°C) .

### Gel fraction measurement before and after crosslinking

The non-crosslinked particulate acrylic binder polymer, before irradiation with UV, was immersed in a 135°C xylene solution according to ASTM D 2765 and boiled for 12 hours, the remaining weight was measured, and the gel fraction was measured as a percentage of the remaining weight compared to the initial weight.

The crosslinked particulate acrylic binder polymer, after irradiation with UV, was immersed in a xylene solution at 135°C according to ASTMD2765 and boiled for 12 hours, and the remaining weight was measured, and the gel fraction was measured as a percentage of the remaining weight compared to the initial weight.

### Storage modulus measurement before and after crosslinking

The storage modulus was measured by testing a particulate acrylic binder polymer before irradiation with UV with a constant frequency of 1 Hz, a preload force of 0.01 N, an amplitude of 20 µm, and a tensile force of 1°C/min from -100°C to 150°C at a force track of 120%.

The storage modulus was measured by testing a particulate acrylic binder polymer after irradiation with UV with a constant frequency of 1 Hz, a preload force of 0.01 N, an amplitude of 20 µm, and a tensile force of 1°C/min from -100°C to 150°C at a force track of 120%.

**[Table 1]**

| | BPMA content (ppm ) | Tg after crossli nking (°C) | Gel fraction (%) | | Storage modulus before crosslinking | | | Storage modulus after crosslinking | | |
|---|---|---|---|---|---|---|---|---|---|---|
| | | | Befo re cros slin king | Afte r cros slin king | 25°C | 50°C | 85°C | 25°C | 50°C | 85° C |
| Exam ple 1 | 10, 0 00 | -40 | 58 | 77 | 86, 91 5 | 38, 1 21 | 16, 68 9 | 113, 0 16 | 53, 11 2 | 34, 320 |
| Exam ple 2 | 5,00 0 | -40 | 54 | 75 | 73, 93 7 | 36, 0 46 | 15,20 8 | 102, 0 90 | 46, 31 1 | 27, 245 |
| Comp arat ive Exam ple 1 | - | -40 | 53 | 55 | 81, 04 2 | 34,4 08 | 11,81 6 | 84,76 7 | 38, 92 0 | 16, 276 |

As can be seen in Table 1, the particulate acrylic binder polymer prepared in Examples 1 and 2 contains a benzophenone functional group, so the storage modulus and gel fraction are increased after crosslinking compared to before crosslinking.

On the other hand, the particulate acrylic binder polymer prepared in Comparative Example 1 does not contain a benzophenone functional group and thus is not crosslinked even when irradiated with ultraviolet rays, so even after irradiation with ultraviolet rays, the increase in storage modulus and gel fraction was insignificant compared to before irradiation with ultraviolet rays.

### Evaluation Example 2: Evaluation of separator properties

The thickness, breathability, basis weight, packing density, peel strength, heat shrinkage rate, and electrical resistance (ER) between the porous polymer substrate and the organic and inorganic composite porous layer of the separator prepared in Examples 1 to 2 and Comparative Examples 1 to 2 are measured and shown in Table 2 below.

### Air permeability measurement

Air permeability (Gurley) was measured by the ASTM D726-94 method. Gurley, as used herein, is the resistance to the flow of air measured by a Gurley densometer. The air permeability value described here is expressed as the time (seconds) required for 100 cc of air to pass through the cross-section of 1 in² of the separator under a pressure of 12.2 inH₂O, that is, the ventilation time.

### Basis weight measurement

Basis weight (g/m²) was evaluated by preparing a sample so that each of the widths and lengths of the separator was 1 m, and measuring the weight.

### Packing density measurement

The packing density was calculated according to Formula 1 below: Packing density = loading amount/thickness of the organic and inorganic composite porous layer

### Measurement of peel strength between porous polymer substrate and organic and inorganic composite porous layer

After fixing the separator on the glass plate using double-sided tape, the tape (3M transparent tape) was firmly attached to the exposed organic and inorganic composite porous layer, and then the force required to remove the tape was measured using a Lloyd LS-1.

### Heat shrinkage rate measurement

A separator was cut to a size of 50 mm (length) x 50 mm (width) to prepare a specimen, which was kept in an oven heated to 135°C for 30 minutes, then the specimen was recovered and calculated by measuring the changed lengths for mechanical and perpendicular directions: Heat shrinkage rate (%) at 135°C = {(dimension before shrinkage - dimension after shrinkage)/dimension before shrinkage} × 100

### Electrical resistance measurement

A coin cell was prepared using the separators prepared in Examples 1 and 2 and Comparative Examples 1 and 2, and after the coin cell was left at room temperature for 1 day, the resistance of the separator was measured by an impedance measurement method. The coin cell was prepared as follows.

Artificial graphite as an anode active material, Denka black as a conductive material, and polyvinylidene fluoride (PVdF) as a binder were mixed at a weight ratio of 75: 5: 20, and N-methylpyrrolidone (NMP) as a solvent was added to prepare an anode slurry.

An anode was prepared by applying and drying the anode slurry on a copper current collector at a loading amount of 3.8 mAh/cm².

LiCoO₂ as a cathode active material, Denka black as a conductive material, and polyvinylidene fluoride (PVdF) as a binder were added to N-methylpyrrolidone (NMP) as a solvent in a weight ratio of 85: 5: 10 to prepare a cathode active material slurry. The cathode active material slurry was applied on a sheet-shaped aluminum current collector and dried to form a cathode active material layer such that the final cathode loading amount was 3.3 mAh/cm².

Separators of each of the Examples and Comparative Examples were interposed between the anode and the cathode prepared as described above, and a non-aqueous electrolyte (1M LiPF₆, ethylene carbonate (EC)/propylene carbonate (PC)/diethyl carbonate (DEC), volume ratio: 3:3:4) was injected to manufacture a coin cell.

**[Table 2]**

| | | Example 1 | Example 2 | Comparative Example 1 | Comparative Example 2 |
|---|---|---|---|---|---|
| Thickness (µm) | | 12.1 | 12.0 | 12.0 | 12.1 |
| Air permeabilit y (sec/100 cc) | | 159 | 164 | 170 | 159 |
| Basis weight (g/m²) | | 9.25 | 9.27 | 9.15 | 9.25 |
| Packing density (g/cm²) | | 1.73 | 1.83 | 1.77 | 1.73 |
| Peel Strength (gf/15mm) | | 40.6 | 43.2 | 60.7 | 61.4 |
| Heat shri nkag e rate | MD | 5.0 | 5.6 | 14.4 | 12.2 |
| | TD | 1.7 | 1.7 | 5.0 | 7.8 |
| (%) | | | | | |
| Electrical resistance (Ω) | | 0.71 | 0.68 | 0.64 | 0.68 |

As can be seen in Table 2, it was confirmed that the separators prepared in Examples 1 to 2 include the particulate acrylic binder polymer having a crosslinked structure through a benzophenone functional group, thereby ensuring peel strength and excellent heat resistance.

Specifically, it was confirmed that the separators prepared in Examples 1 to 2 had excellent heat resistance compared to the separators prepared in Comparative Examples 1 to 2, including the particulate acrylic binder polymer having a crosslinked structure via a benzophenone functional group.

## Claims

1. A separator for an electrochemical device, the separator comprising:
a porous polymer substrate; and
an organic and inorganic composite porous layer positioned on at least one surface of the porous polymer substrate and containing inorganic particles and a binder polymer,
wherein the binder polymer comprises a particulate binder polymer, and the particulate acrylic binder polymer has a crosslinked structure mediated by a benzophenone functional group.

2. The separator of claim 1, wherein the particulate acrylic binder polymer comprises an acrylic monomer containing a benzophenone functional group.

3. The separator of claim 2, wherein the particulate acrylic binder polymer further comprises a branched or non-branched (meth)acrylic acid monomer having 1 to 20 carbon atoms, a branched or non-branched (meth)acrylate monomer having 1 to 20 carbon atoms, an acrylonitrile monomer, a vinyl pyrrolidone monomer, a vinyl acetate monomer, or two or more thereof.

4. The separator of claim 1, wherein the particulate acrylic binder polymer has a structure represented by the following Formula 1: 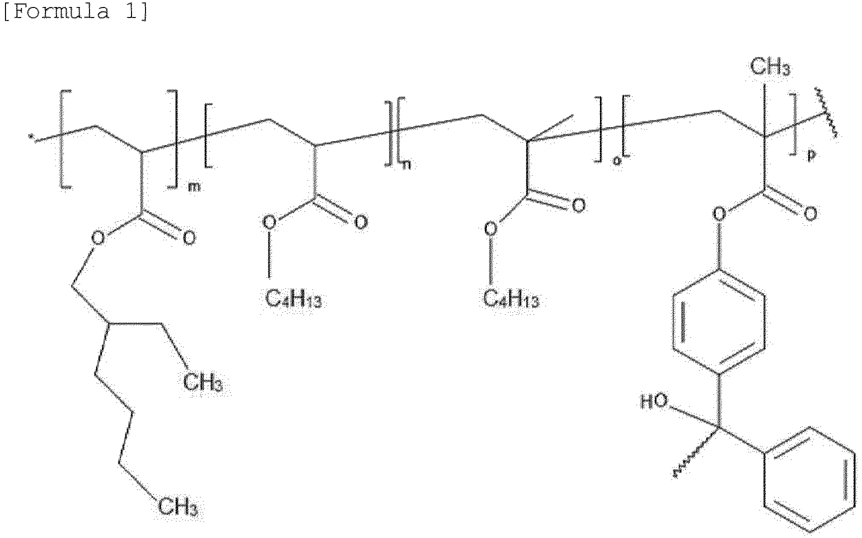 In Formula 1, m, n, o, and p are each an integer of 1 or greater.

5. The separator of claim 1, wherein the particulate acrylic binder polymer has a storage modulus at 50°C in a range of 20,000 to 300,000 Pa.

6. The separator of claim 1, wherein the particulate acrylic binder polymer has a glass transition temperature in a range of -70°C to 70°C.

7. The separator of claim 1, wherein the particulate acrylic binder polymer has a gel fraction in a range of 10% to 90%.

8. The separator of claim 1, wherein the particulate acrylic binder polymer has an average particle diameter in a range of 0.001 to 10 pm.

9. The separator of claim 1, wherein the inorganic particles comprise any one of BaTiO, BaTiO₃, Pb(Zr,Ti)O₃ (PZT), Pb₁₋ₓLaₓZr_{1-y}Ti_{y}O₃ (PLZT, where 0 < x < 1, 0 < y < 1), Pb(Mg_{1/3}Nb_{2/3})O₃-PbTiO₃ (PMN-PT), Hafnia (HfO₂), SrTiO₃, SnO₂, CeO₂, MgO, Mg(OH)₂, NiO, CaO, ZnO, Al(OH)₃, ZrO₂, Y₂O₃, Al₂O₃, γ-AlOOH, SiC, TiO₂, lithium phosphate (Li₃PO₄), lithium titanium phosphate (LiₓTi_{y}(PO₄)₃, where 0 < x < 2, 0 < y < 3), lithium aluminum titanium phosphate (LiₓAl_{y}Ti_{z}(PO₄)₃, where 0 < x < 2, 0 < y < 1, 0 < z < 3), (LiAlTiP)ₓO_{y}-based glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x <4, 0 < y < 2), SiS₂-based glass (LiₓSi_{y}S_{z}, 0 < x < 3, 0 < y < 2, 0 < z < 4), P₂S₅-based glass (LiₓP_{y}S_{z}, 0 < x < 3, 0 < y < 3, 0 < z < 7), or two or more thereof.

10. The separator of claim 1, wherein the inorganic particle has an average particle diameter in a range of 0.1 nm to 2.0 pm.

11. The separator of claim 1, wherein the binder polymer further comprises a non-particulate binder polymer.

12. The separator of claim 11, wherein the non-particulate binder polymer comprises any one of carboxy methyl cellulose, polyacrylic acid, polyacrylamide, or two or more thereof.

13. The separator of claim 1, wherein a weight ratio of the inorganic particles and the binder polymer is in a range of 99.9:0.1 to 70:30.

14. The separator of claim 11, wherein a weight ratio of the particulate acrylic binder polymer and the non-particulate binder polymer is in a range of 5:95 to 95:5.

15. The separator of claim 1, wherein the organic and inorganic composite porous layer has a thickness in a range of 0.1 to 10 µm.

16. The separator of claim 1, wherein a heat shrinkage rate after the separator is left at 135°C for 30 minutes is 10% or less in a machine direction (MD) and 10% or less in a transverse direction (TD).

17. The separator of claim 1, wherein a peel strength between the porous polymer substrate and the organic and inorganic composite porous layer is in a range of 5 to 1000 gf/15 mm.

18. A method of manufacturing a separator for an electrochemical device, the method comprising:
preparing a slurry for forming an organic and inorganic composite porous layer comprising inorganic particles and a binder polymer comprising a non-crosslinked particulate acrylic binder polymer containing a benzophenone functional group;
applying and drying the slurry on at least one surface of a porous polymer substrate; and
irradiating with ultraviolet rays.

19. The method of claim 18, wherein the non-crosslinked particulate acrylic binder polymer comprises a first acrylic monomer and a second acrylic monomer, and
wherein the first acrylic monomer comprises any one of benzophenone methacrylate, 6-(4-benzoylphenoxy)hexyl methacrylate, benzophenone acrylate, and two or more thereof.

20. The method of claim 19, wherein the second acrylic monomer comprises any one of a branched or non-branched (meth)acrylic acid monomer having 1 to 20 carbon atoms, a branched or non-branched (meth)acrylate monomer having 1 to 20 carbon atoms, an acrylonitrile monomer, a vinyl pyrrolidone monomer, a vinyl acetate monomer, or two or more thereof.

21. The method of claim 18, wherein non-crosslinked particulate acrylic binder polymer comprises a copolymer represented by the following Formula 2: 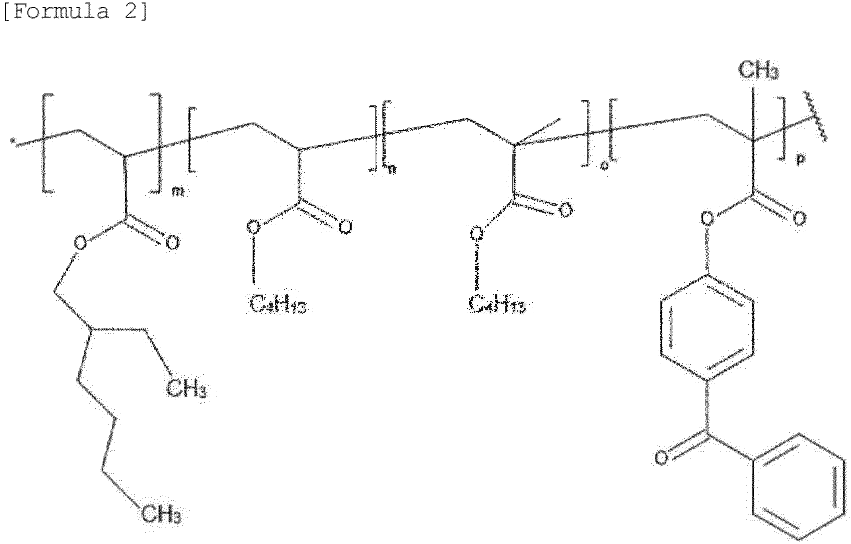 In Formula 2, m, n, o, and p are each an integer of 1 or greater.

22. The method of claim 19, wherein the content of the first acrylic monomer is 500 to 20,000 ppm based on the weight of the second acrylic monomer.

23. The method of claim 18, wherein the non-crosslinked particulate acrylic binder polymer at 50°C before the irradiation with ultraviolet rays has a storage modulus in a range of 10,000 to 80,000 Pa.

24. The method of claim 18, wherein the change rate of the storage modulus of the non-crosslinked particulate acrylic binder polymer at 50°C before and after the irradiation with ultraviolet rays is in a range of 20% to 300%.

25. The method of claim 18, wherein the irradiation amount of the ultraviolet rays is in a range of 0.1 to 10 J.

26. The method of claim 18, wherein the wavelength of the ultraviolet rays is in a range of 200 to 400 nm.

27. The method of claim 26, wherein the wavelength of the ultraviolet rays is in a range of 230 to 350 nm.

28. An electrochemical device comprising a cathode, an anode, and a separator disposed between the cathode and the anode,
wherein the separator is the separator of any one of claims 1 to 17.
